# EUROPÄISCHE PATENTSCHRIFT

(11) **EP 0 570 379 B1**
(45) Veröffentlichungstag und Bekanntmachung des Hinweises auf die Patenterteilung: **01.03.1995**
(21) Anmeldenummer: 92900874.6
(22) Anmeldetag: 06.12.1991
(51) Int. Cl.: F22B 3/04, B01D 1/28, F04D 29/58

(54) **PROZESSANLAGE**
PROCESS PLANT
INSTALLATION DE TRAITEMENT

(30) Priorität: 08.02.1991 DE 4103891
(43) Veröffentlichungstag der Anmeldung: 24.11.1993
(73) Patentinhaber: SIEMENS AKTIENGESELLSCHAFT, 80333 München (DE)
(72) Erfinder: TRIMBORN, Peter, D-8500 Nürnberg 20 (DE)
(86) Internationale Anmeldenummer: DE9100953
(87) Internationale Veröffentlichungsnummer: WO9214094

(56) Entgegenhaltungen:
- EP-A- 0 019 297
- US-A- 1 400 813
- US-A- 3 455 791

## Beschreibung

Die Erfindung betrifft ein Verfahren zum Betrieb einer Prozeßanlage.

Eine solches Verfahren ist durch die WO 89/12201 bekannt. Bei diesem Verfahren wird mittels des Gasringkompressors der aus dem Verdampfer abgesaugte Brüden verdichtet und somit noch weiter erwärmt. Hierdurch ergibt sich am Kondensator eine größere Wärmedifferenz zwischen dem Brüden und der dem Kondensator als Kühlflüssigkeit zugeführten Prozeßflüssigkeit. Damit kann eine größere Wärmemenge auf die Prozeßflüssigkeit übertragen werden, was eine Verminderung der Wärmeverluste bei der Durchführung des Prozesses bedeutet.

Die durch die Verdichtung des Brüden bedingte Erwärmung desselben führt aber auch zu einer entsprechenden Erwärmung des Gasringkompressors, der damit eine entsprechende Wärmemenge an die Umgebung abgibt.

Zur Vermeidung einer unerwünschten Erwärmung des durch einen Gasringkompressor verdichteten Gases ist es durch das DE-U-88 07 064 bekannt, in die Verdichtungsstrecke des Gasringkompressors eine Kühlflüssigkeit einzusprühen. Durch die Verdampfung dieser Flüssigkeit wird dem zu verdichtenden Gas Wärme entzogen und damit eine unerwünschte Erwärmung des Gases beim Verdichtungsvorgang unterbunden.

Der Erfindung liegt nunmehr die Aufgabe zugrunde, ein Verfahren zum Betrieb einer Prozeßanlage anzugeben, bei dem der Wirkungsgrad durch die Verminderung von Abwärmeverlusten verbessert wird.

Die Lösung der gestellten Aufgabe gelingt durch die im Kennzeichen des Anspruchs 1 angegebenen Merkmale. Durch das Verdampfen der in den Gasringkompressor eingebrachten Flüssigkeit wird dem zu verdichtenden Prozeßgas Wärme entzogen und damit die Erwärmung des Gasringkompressors reduziert. Der Gasringkompressor kann daher nur eine geringe Wärmemenge an seine Umgebung abgeben. Dadurch, daß die eingebrachte Flüssigkeitsmenge so bemessen ist, daß eine möglichst vollständige Sättigung des verdichteten Gemisches erreicht wird, ergibt sich eine optimale Kühlung des zu verdichtenden Prozeßgases. Damit wird die Temperaturdifferenz zwischen dem durch das verdichtete Prozeßgas erwärmten Gasringkompressor und der Umgebung und somit auch die Wärmeabgabe besonders gering gehalten. Die für die Verdampfung der eingebrachten Flüssigkeit aufgewendete Wärmemenge kann durch die Kondensation in dem nachgeschalteten Kondensator wieder zurückgewonnen werden. Die intensive Kühlung des Gasringkompressors durch die Verdampfung der eingebrachten Flüssigkeit hat weiterhin den Vorteil, daß der Gasringkompressor für höhere Verdichtungsverhältnisse eingesetzt werden kann. Dadurch, daß die in den Gasringkompressor eingebrachte verdampfbare Flüssigkeit dem Kondensator entnommen wird, wird der Verbrauch an zusätzlich zuzuführender verdampfbarer Flüssigkeit klein gehalten.

Eine intensive Verdampfung der Flüssigkeit wird mit der Ausgestaltung des Verfahrens nach Anspruch 2 erreicht.

Besonders vorteilhaft ist es, als verdampfbare Flüssigkeit Prozeßflüssigkeit zu verwenden. Ein geschlossener Prozeßkreislauf läßt sich dadurch erreichen, daß die im Kondensator zurückgewonnene Kondensationswärme wieder dem Verdampfer zugeführt wird.

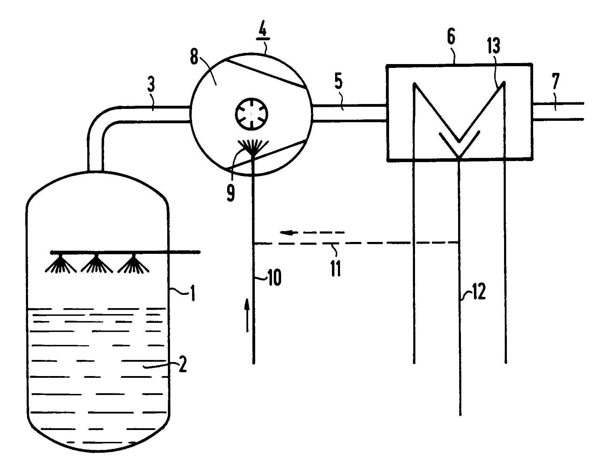

Anhand eines in der Zeichnung dargestellten Ausführungsbeispieles wird der Anmeldungsgegenstand nachfolgend näher beschrieben.

Mit 1 ist ein Verdampfer bezeichnet, in den eine zu verdampfende Prozeßflüssigkeit 2 eingefüllt ist. Die notwendige Verdampfungswärme kann mittels eines im Verdampfer 1 eingebauten, gesonderten, in der Zeichnung nicht dargestellten Heizelementes erzeugt werden. Üblicherweise wird in dem Verdampfer 1 mittels einer Vakuumpumpe ein Unterdruck erzeugt, so daß die Verdampfung der Prozeßflüssigkeit bei relativ niedrigen Temperaturen erfolgt. Uber eine an den Verdampfer 1 angeschlossene Absaugleitung 3 wird die verdampfte Prozeßflüssigkeit von einem Gasringkompressor 4 abgesaugt. In dem Gasringkompressor 4 wird die gasförmige Prozeßflüssigkeit verdichtet und über eine Verbindungsleitung 5 einem Kondensator 6 zugeführt, den sie über eine Auslaßleitung 7 verläßt.

Wie schematisch angedeutet, wird in den Verdichtungsraum 8 des Gasringkompressors 4 eine verdampfbare Flüssigkeit 9 eingesprüht. Eine konstruktive Ausführungsform zum Einbringen der Flüssigkeit in den Verdichtungsraum 8 eines Gasringkompressors 4 ist durch das DE-U-88 07 064 bekannt, so daß auf eine detaillierte Beschreibung an dieser Stelle verzichtet werden kann. Die verdampfbare Flüssigkeit 9 kann entweder über eine erste Leitung 10 separat zugeführt oder über eine zweite Leitung 11 der die kondensierte Flüssigkeit des Kondensators 6 ableitenden Abflußleitung 12 entnommen werden.

Die beim Verdichten der gasförmigen Prozeßflüssigkeit im Gasringkompressor 4 entstehende Wärme wird zum Verdampfen der eingesprühten Flüssigkeit 9 genutzt. Es wird hierbei soviel Flüssigkeit 9 eingebracht, daß eine möglichst vollständige Sättigung des verdichteten Gemisches erreicht wird. Durch den Wärmeverbrauch beim Verdampfen der eingesprühten Flüssigkeit 9 wird die Temperatur in dem Gasringkompressor 4 niedrig gehalten, so daß dieser nur wenig erwärmt wird. Damit besteht gegenüber der Umgebung des Gasringkompressors 4 eine relativ kleine Temperaturdifferenz, so daß nur wenig Wärme von dem Gasringkompressor 4 an die Umgebung abgegeben wird. Es wird somit ein hoher Anteil der über den Verdampfer 1 und den Gasringkompressor 4 zugeführten Energie in dem aus verdampfter Prozeßflüssigkeit 2 und Flüssigkeit 9 bestehenden Gemisch gehalten. Bei der anschließenden Kondensation des Gemisches in dem Kondensator 6 wird die vorher zum Verdampfen aufgenommene Wärme an die das Kühlelement 13 des Kondensators 6 durchströmende Kühlflüssigkeit abgegeben. Die erwärmte Kühlflüssigkeit kann dann als Wärmequelle für Erwärmungsvorgänge genutzt werden.

Ein geschlossener Kreislauf bei der Prozeßanlage ergibt sich, wenn die Prozeßflüssigkeit 2 als Kühlflüssigkeit für den Kondensator 6 verwendet wird. Mittels einer Pumpe kann die Prozeßflüssigkeit zwischen dem Verdampfer 1 und dem Kühlelement 13 des Kondensators 6 umgewälzt werden. Dabei wird die im Kühlelement 13 aufgenommene Wärme zum Verdampfen der Prozeßflüssigkeit 2 im Verdampfer 1 genutzt. Je nach dem von welcher Art die Prozeßflüssigkeit 2 ist, kann es zweckmäßig sein, in dem Verdampfer 1 einen Wärmetauscher anzuordnen, durch den eine physikalische Trennung zwischen der Prozeßflüssigkeit 2 und der Kühlflüssigkeit des Kühlelementes 13 erfolgt.

## Patentansprüche

1. Verfahren zum Betrieb einer Prozeßanlage, die mindestens einen Verdampfer (1) für eine Prozeßflüssigkeit (2), einen diesem nachgeschalteten Kondensator (6) und einen zwischen dem Verdampfer (1) und dem Kondensator (6) angeordneten Gasringkompressor (4) aufweist, bei welchem Verfahren die im Kondensator (6) zurückgewonnene Kondensationswärme genutzt wird,
**dadurch gekennzeichnet,**
daß in den Verdichtungsraum (8) des Gasringkompressors (4) eine dem Kondensator (6) als Kondensat entnommene verdampfbare Flüssigkeit (9) eingebracht wird, wobei die Einbringmenge der verdampfbaren Flüssigkeit (9) so bemessen wird, daß ein möglichst hoher Sättigungsgrad des im Gasringkompressors (4) verdichteten Gases erreicht wird.

2. Verfahren nach Anspruch 1,
**dadurch gekennzeichnet,**
daß die verdampfbare Flüssigkeit (9) mittels einer Sprühdüse eingebracht und durch diese nebelartig versprüht wird.

3. Verfahren nach Anspruch 1 und/oder 2,
**dadurch gekennzeichnet,**
daß als verdampfbare Flüssigkeit (9) Prozeßflüssigkeit (2) verwendet wird.

4. Verfahren nach einem oder mehreren der vorhergehenden Ansprüche,
**dadurch gekennzeichnet,**
daß die im Kondensator (6) zurückgewonnene Kondensationswärme dem Verdampfer (1) zugeführt wird.

## Claims

1. Method of operating a process plant which comprises at least one evaporator (1) for a process fluid (2), a condenser (6) which is connected downstream of the evaporator, and a gas ring compressor (4) which is disposed between the evaporator (1) and the condenser (6), in the case of which method the heat of condensation recovered in the condenser (6) is used, characterized in that a vaporizable fluid (9) which is removed from the condenser (6) as condensate is introduced into the compression chamber (8) of the gas ring compressor (4), the amount of vaporizable fluid (9) introduced being regulated in such a way that as high a degree as possible of saturation of the gas compressed in the gas ring compressor (4) is attained.

2. Method according to Claim 1, characterized in that the vaporizable fluid (9) is introduced by a spray nozzle and is sprayed by the latter in the form of a mist.

3. Method according to Claim 1 and/or 2, characterized in that process fluid (2) is used as vaporizable fluid (9).

4. Method according to one or more of the preceding claims, characterized in that the heat of condensation recovered in the condenser (6) is delivered to the evaporator (1).

## Revendications

1. Procédé pour faire fonctionner une installation de traitement, qui comporte au moins un évaporateur (1) pour un liquide (2) de traitement, un condenseur (6) monté en aval de celui-ci et un compresseur (4) à anneau de gaz interposé entre l'évaporateur (1) et le condenseur (6), procédé dans lequel la chaleur de condensation récupérée dans le condenseur (6) est utilisée,
caractérisé
en ce que dans la chambre de compression du compresseur (4) à anneau de gaz, est introduit un liquide (9) susceptible d'être évaporé et prélevé du condenseur (6) sous forme de condensat, la quantité de liquide (9) susceptible d'être évaporée et qui est introduite étant telle que l'on atteint un degré de saturation aussi grand que possible du gaz comprimé dans le compresseur (4) à anneau de gaz.

2. Procédé suivant la revendication 1,
caractérisé
en ce que le liquide (9) susceptible d'être évaporé est introduit au moyen d'une buse de projection et est projeté par celle-ci sous la forme d'un brouillard.

3. Procédé suivant la revendication 1 et/ou 2,
caractérisé
en ce qu'il consiste à utiliser comme liquide (9) susceptible de s'évaporer du liquide (2) de traitement.

4. Procédé suivant l'une ou plusieurs des revendications précédentes,
caractérisé
en ce qu'il consiste à envoyer la chaleur de condensation récupérée dans le condenseur (6) à l'évaporateur (1).
